# EUROPEAN PATENT APPLICATION

(11) **EP 4 624 015 A1**
(43) Date of publication of application: **01.10.2025**
(21) Application number: 23894388.0
(22) Date of filing: 02.11.2023
(51) Int. Cl.: B01D 19/00, A01G 7/02, A01G 9/18, C02F 1/20

(54) **CARBON DIOXIDE RECOVERY DEVICE, CARBON DIOXIDE RECOVERY METHOD, PLANT RAISING METHOD USING CARBON DIOXIDE RECOVERY METHOD, AND PLANT RAISING MECHANISM**

(30) Priority: 24.11.2022 JP 2022187567
(71) Applicant: CANON KABUSHIKI KAISHA, Tokyo 146-8501 (JP)
(72) Inventor: SUZUKI, Norihiro, Tokyo 146-8501 (JP); AOTANI, Takaharu, Tokyo 146-8501 (JP); SAKAKIBARA, Teigo, Tokyo 146-8501 (JP)
(74) Representative: Canon Europe Limited
(86) International application number: PCT/JP2023/039564
(87) International publication number: WO 2024/111376

(57) **Abstract**

A carbon dioxide recovery apparatus includes a storage portion that includes a partition wall separating an atmosphere and an inner space and that stores in the inner space a liquid in which carbon dioxide is dissolved. In addition, the apparatus includes a suction portion that lifts the liquid by suctioning a gas present in the inner space. Moreover, the apparatus includes an accumulation portion that accumulates carbon dioxide recovered from a Torricellian vacuum space that is formed as the liquid is lifted.

## Description

### Technical Field

The present invention relates to a carbon dioxide recovery apparatus, a carbon dioxide recovery method, a plant growing method using the carbon dioxide recovery method, and a plant growing mechanism.

### Background Art

As a global warming countermeasure, there is a worldwide demand for reduction of the load on the global environment by reduction of carbon dioxide in the atmosphere. For this purpose, it is necessary to do two things: reduction of carbon dioxide emission; and reduction of the carbon dioxide concentration in the atmosphere by recovering carbon dioxide present in the atmosphere. The dioxide concentration in the atmosphere is as low as about 400 ppm, and, in order to reduce the carbon dioxide concentration in the atmosphere, it is preferable to use a method that can minimize emission of new carbon dioxide as energy for recovery.

Regarding carbon dioxide present in the atmosphere, it is necessary to focus attention to carbon dioxide as a gas present on the Earth's surface. That is, carbon dioxide as a gas present on the Earth's surface is the total of carbon dioxide in the atmosphere and carbon dioxide in water such as the sea, in which a part of the carbon dioxide in the atmosphere is dissolved. As an example of means of removing carbon dioxide without emitting new carbon dioxide, there is a method of removing carbon dioxide via seawater or freshwater. Carbon dioxide included in the atmosphere is dissolved in seawater and freshwater, and a method of extracting carbon dioxide from seawater or freshwater by heating or depressurization is known.

PTL 1 describes a carbon dioxide removing apparatus, for a fish growing tank, that removes carbon dioxide dissolved in seawater in the fish growing tank by depressurizing seawater. In order to remove carbon dioxide in seawater, the apparatus disclosed in PTL 1 discharges to the outside carbon dioxide that have been formed into bubbles in a depressurized space and supplies seawater from which carbon dioxide has been removed into a water tank. However, because this apparatus has a nozzle and requires a control unit for maintaining the inside of the tank in a depressurized state, the apparatus has a complex apparatus configuration and the cost of the apparatus is high.

### Citation List

### Patent Literature

PTL 1: Japanese Patent Laid-Open No. 2003-259759

### Summary of Invention

### Technical Problem

The present invention provides an apparatus that recovers carbon dioxide in a liquid with a simple apparatus configuration.

### Solution to Problem

To solve the above problem, a carbon dioxide recovery apparatus includes: a storage portion that includes a partition wall separating an atmosphere and an inner space and that stores in the inner space a liquid in which carbon dioxide is dissolved; a suction portion that lifts the liquid by suctioning a gas present in the inner space; and an accumulation portion that accumulates carbon dioxide recovered from a Torricellian vacuum space that is formed as the liquid is lifted.

### Advantageous Effects of Invention

It is possible to provide an apparatus that recovers carbon dioxide in a liquid with a simple apparatus configuration.

### Brief Description of Drawings

[Fig. 1] Fig. 1 illustrates a preferred embodiment of the present invention.
[Fig. 2] Fig. 2 illustrates a first embodiment of the present invention.
[Fig. 3A] Fig. 3A illustrates the water vapor pressure and the Torricellian vacuum height in the first embodiment of the present invention.
[Fig. 3B] Fig. 3B illustrates the water vapor pressure and the Torricellian vacuum height in the first embodiment of the present invention.
[Fig. 4A] Fig. 4A illustrates the total head and the required power of a water lifting pump in the first embodiment of the present invention.
[Fig. 4B] Fig. 4B illustrates the total head and the required power of the water lifting pump in the first embodiment of the present invention.
[Fig. 5] Fig. 5 illustrates a second embodiment of the present invention.
[Fig. 6] Fig. 6 illustrates a third embodiment the present invention.
[Fig. 7] Fig. 7 illustrates a fourth embodiment the present invention.
[Fig. 8] Fig. 8 illustrates a fifth embodiment the present invention.
[Fig. 9] Fig. 9 illustrates a sixth embodiment the present invention.
[Fig. 10] Fig. 10 illustrates a seventh embodiment the present invention.
[Fig. 11] Fig. 11 illustrates an eighth embodiment the present invention.
[Fig. 12] Fig. 12 illustrates a ninth embodiment the present invention.

### Description of Embodiments

Hereafter, the present invention will be described in detail by using preferred embodiments as examples. The present invention is not limited to the embodiments described below, and the scope of the present invention includes various modifications, improvements, and the like that can be made on the following embodiments within the gist of the present invention based on the general knowledge of a person having ordinary skill in the art. A carbon dioxide recovery apparatus as an example of an embodiment includes a storage portion that includes a partition wall separating an atmosphere and an inner space and that stores in the inner space a liquid in which carbon dioxide is dissolved. In addition, the apparatus includes a suction portion that lifts the liquid by suctioning a gas present in the inner space. Moreover, the apparatus includes an accumulation portion that accumulates carbon dioxide recovered from a Torricellian vacuum space that is formed as the liquid is lifted.

The suction portion may recover the carbon dioxide from the Torricellian vacuum space.

As an example of the configuration of the storage portion, the storage portion may have a first opening and a second opening, and one of the openings may be provided above the other of the openings in a vertical direction with respect to a liquid surface.

The liquid may be at least one of rainwater, river water, lake water, tap water, and seawater.

The present invention provides carbon dioxide recovery method and apparatus that recover carbon dioxide from a Torricellian vacuum (a vacuum space that is formed in an upper part in the vertical direction as water is lifted) by lifting a carbon dioxide solution such as rainwater, river water, lake water, tap water, or seawater.

By utilizing the present invention, it is possible to recover carbon dioxide in the atmosphere that is dissolved in rainwater, river water, lake water, tap water, or seawater by using an apparatus having a simple configuration. Moreover, by utilizing the aforementioned Torricellian vacuum and the siphon principle, it is also possible to provide a recovery apparatus and a recovery method that recover carbon dioxide from seawater or freshwater by depressurization and that circulates seawater or freshwater in a depressurized state in the apparatus.

As a means of recovering carbon dioxide in the atmosphere with a minimal environmental load due to carbon dioxide emission, carbon dioxide dissolved in rainwater, river water, lake water, or seawater is recovered by heating or depressurizing the rainwater or the like. Because rainwater has a large surface area in contact with the atmosphere, carbon dioxide in the atmosphere is dissolved in rainwater in an equilibrium pressure state. In particular, the solubility of carbon dioxide in seawater is high. The solubility of carbon dioxide in water tends to be high at low temperature and is low at high temperature. In addition, the higher the pressure, the higher the solubility of carbon dioxide; and the lower the pressure, the lower the solubility.

In order to reduce the carbon dioxide amount in the atmosphere as a global warming countermeasure, it is necessary to extract carbon dioxide efficiently while supplying/draining a large amount of seawater or freshwater into/from an apparatus. In order to recover carbon dioxide from seawater or freshwater with low energy, it is desirable to extract carbon dioxide by depressurizing seawater or freshwater.

To do so, seawater or freshwater is lifted, and carbon dioxide is recovered from Torricellian vacuum (a vacuum space formed in an upper part as water is lifted). It is more desirable that seawater or freshwater be circulated in the apparatus by utilizing the siphon principle. Torricellian vacuum is a vacuum space that is created in a space above a height that is a positional limit to which water can be lifted by depressurization. It is generally known that Torricellian vacuum is created depending on the relationship among atmospheric pressure, the specific gravity of a solution, and the vapor pressure of the solution. At sea level, Torricellian vacuum is formed when water is lifted to a height greater than 10 m. Because carbon dioxide dissolved in seawater or freshwater is released as a gas into a Torricellian vacuum space, the carbon dioxide is discharged by using a vacuum pump to recover the carbon dioxide into a recovery tank.

It is possible to utilize the siphon principle in order to circulate the lifted seawater or freshwater in the apparatus in a depressurized state. The pressure density of seawater in a water supply path due to its own weight and the pressure density of seawater in a drain path are the same pressure density, as long as the water supply path and the drain path are at the same positional height. If the water level of the water supply surface is higher than the water level of the drain surface, seawater flows from the water supply side toward the drain side without power assist such as a water-jet pump. If the water supply surface and the drain surface are at the same height, seawater can circulate in the apparatus when a water-jet pump performs power assistance only slightly.

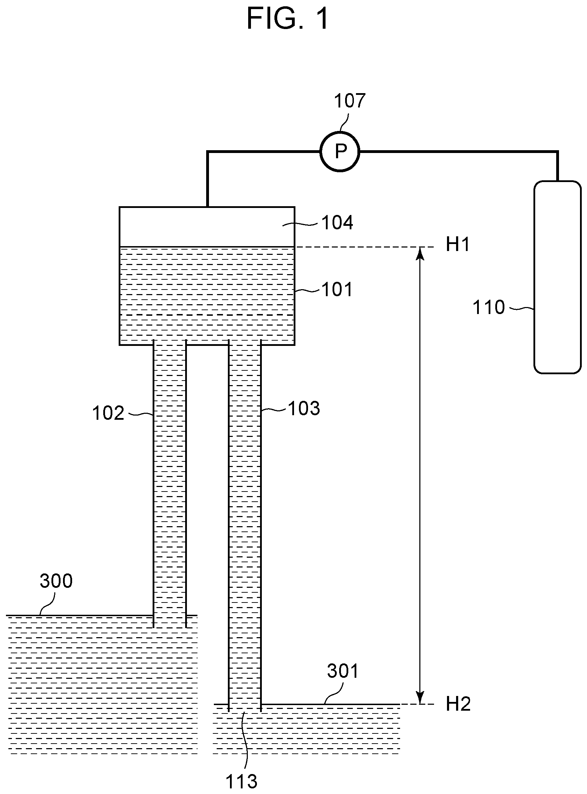

Preferred embodiments will be described below. Referring to Fig. 1, a system using freshwater in which CO₂ is dissolved will be described as an example.

When freshwater 300 on the water supply side and freshwater 301 on the drain side are compared, as illustrated in the figure, the positional height of the water surface of the freshwater 300 is greater than the water surface height of the freshwater 301. A carbon dioxide recovery apparatus according to the present embodiment includes a CO₂ release tank 101, which is a storage portion that includes a partition wall separating an atmosphere and an inner space and that stores in the inner space a liquid in which carbon dioxide is dissolved.

A water lifting pipe 102, the CO₂ release tank 101, and a drain pipe 103 form a flow path along which the freshwater 300 flows. The freshwater 300 and the freshwater 301 are lifted into the flow path as a vacuum pump 107, which is a suction portion, depressurizes the inside of the CO₂ release tank 101.

The freshwater 300 can be lifted to a solution position height H1 when the vacuum pump 107 continuously depressurizes the inside of the CO₂ release tank 101. As a result, a vacuum space 104, which is not filled with the freshwater 300 and is called "Torricellian vacuum", is created in the CO₂ release tank 101.

The upper limit of the solution position height H1 is determined by the relationship among the following factors. That is, the factors are the pressure density of the freshwater 300 present between the solution position height H1 and a solution position height H2, the vapor pressure of the freshwater 300 generated in accordance with the degree of vacuum of the vacuum space 104, and atmospheric pressure generated at the water surface of the solution position height H2.

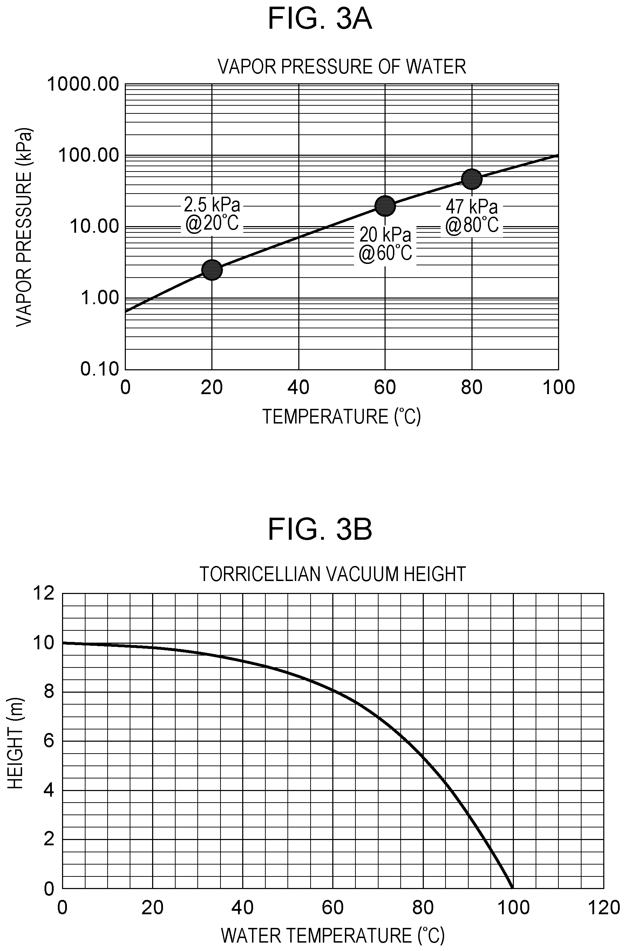

Fig. 3A illustrates the relationship between the vapor pressure and the temperature of water. The vapor pressure when the temperature of the freshwater 300 is 20°C is about 2.5 kPa, and, when the pressure of the vacuum space 104 is 2.5 kPa, the freshwater 300 in the CO₂ release tank 101 boils. Because the solution position height H1 is determined by boiling that occurs due to depressurization of the freshwater 300, for example, the solution position height H1 at sea level is about 10 m, and the solution position height cannot be made greater than this.

As illustrated in Fig. 3A, the vapor pressure of freshwater changes in accordance with the temperature. Therefore, due to boiling that occurs due to depressurization of the freshwater 300, the solution position height H1 becomes the height illustrated in Fig. 3B in accordance with the temperature of the freshwater 300 in the CO₂ release tank 101. For example, when the water temperature is 60°C, the vapor pressure is about 20 kPa, and the solution position height H1 is about 8 m.

Because seawater or freshwater releases carbon dioxide at a temperature lower than the boiling point, it is sufficient that the solution position height H1 be a height corresponding to a temperature lower than or equal to the boiling point of freshwater.

In an example, the solution position height H1 is a height such that the freshwater 300 can circulate in the apparatus even when the temperature of the freshwater 300 is 40°C. The apparatus configuration may be such that the freshwater 300 can circulate in the apparatus and the vacuum space 104 is present in the CO₂ release tank 101 even when the height of the drain surface changes. For example, the configuration may be such that a drain outlet 113 and the freshwater 301 do not contact each other and the solution position height H2 is not influenced by the water surface height of the freshwater 301. The drain outlet 113 functions as an opening provided in the storage portion.

Carbon dioxide in the atmosphere is dissolved in seawater and freshwater present in the natural world. The freshwater 300 present in the CO₂ release tank 101, the water lifting pipe 102, and the drain pipe 103 releases carbon dioxide and the other gas molecules dissolved in the freshwater 300 to the vacuum space 104 by depressurization. Carbon dioxide released to the vacuum space 104 can be accumulated in a CO₂ recovery tank 110, which is an accumulation portion for carbon dioxide, by the vacuum pump 107. Carbon dioxide may be accumulated in the accumulation portion together with the other gas molecules.

When the apparatus is configured to store carbon dioxide in the CO₂ recovery tank 110 together with the other gas molecules recovered simultaneously with carbon dioxide, the apparatus may additionally have the following configuration. That is, a refiner that increases carbon dioxide concentration by removing dissolved gas molecules other than CO₂ may be further provided, and carbon dioxide may be stored in the CO₂ recovery tank 110 after having been refined. Recovered carbon dioxide may be fixed by a plant by being used for plant growing. In this case, instead of the CO₂ recovery tank 110, a plant growing portion having a plant growing space therein functions also as an accumulation portion for carbon dioxide. In order that the recovery tank can fix CO₂, a substance that performs physical adsorption such as zeolite, activated carbon, or MOF (Metal Organic Frameworks), or a substance that performs chemical adsorption utilizing an amine or the like may be used.

It is desirable to use green electric power with small environmental load as electric power for driving a water lifting pump 106 described below and the vacuum pump 107. However, commercial electric power may be used. The water lifting pump 106 serves as an auxiliary circulation mechanism that assists in circulation of a CO₂ solution.

As the inside of the CO₂ release tank 101 is filled with a certain amount of the freshwater 300 and the freshwater 301, the freshwater 300 flows continuously to the freshwater 301 due to the siphon principle. For example, a water lifting pump (not shown) may be used as a method of initially lifting the freshwater 300 or the freshwater 301 to the CO₂ release tank 101. The method is not limited.

The positional height relationship between the drain outlet of the water lifting pipe 102 and the water inlet of the drain pipe 103 in the CO₂ release tank 101 is such that the height of the water supply port of the drain pipe 103 is greater than the height of the drain outlet of the water lifting pipe 102. However, this is an example, and is not limiting.

In an example, the drain outlet 113 is in contact with the water surface. However, the drain outlet 113 and the water surface may have a positional relationship such that these are separated with a space therebetween. If the drain outlet 113 and the water surface has a positional relationship such that these are separated with a space therebetween, the height of the solution position height H2 is an end surface of the drain outlet 113.

In the present embodiment, carbon dioxide is recovered from freshwater. However, carbon dioxide may be recovered from, for example, seawater, rainwater, river water, or lake water. As included in an embodiment described below, it is conceivable that a liquid may circulate in a system to recover CO₂ in the atmosphere and the CO₂ recovered in the liquid may be recovered by using Torricellian vacuum. In this case, because a chemical bond is used to recover CO₂, a basic water solution such as an amine solution may be used instead of pure water, and it is possible to increase efficiency by recovering CO₂ by using a fluorine-based active liquid having high CO₂ solubility. A fluorine-based active liquid having high CO₂ solubility may have a substituent in view of viscosity, and is selected from fluorocarbons that may have a branch structure and/or a cyclic structure. Examples include perflubron, perfluorodecalin, Fluorinert FC-3283, perfluorobutyl perfluorotetrahydrofuran, perfluoro-1-isopropoxyhexane, perfluoro-1,4-diisopropoxybutane, and hydrofluoroether (Novec 7100, Novec 7300). However, these examples do not limit the scope of the present invention. It is effective to mix another liquid in order to adjust the physical properties of the liquid.

### First Embodiment

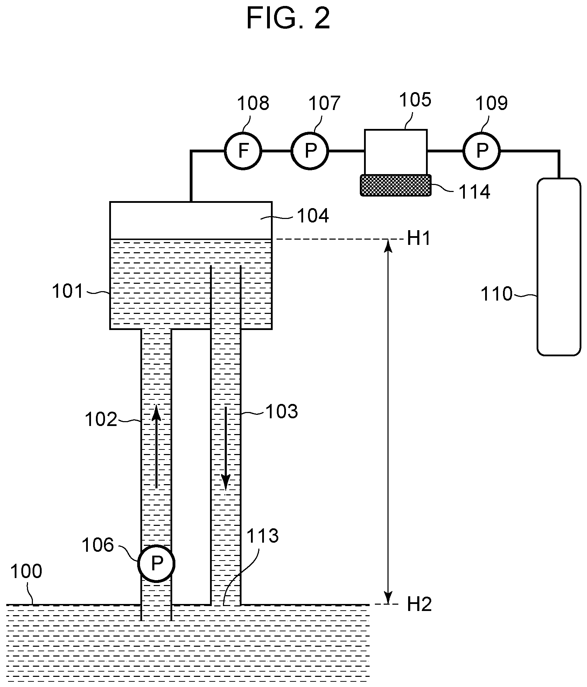

Fig. 2 illustrates a first embodiment of the present invention.

Seawater 100 is lifted to the CO₂ release tank 101 by using the water lifting pump 106 attached to the water lifting pipe 102. The inside of the CO₂ release tank 101 has the vacuum space 104 that is not filled with the seawater 100, and the vacuum space 104 is depressurized relative to atmospheric pressure by the vacuum pump 107 via a vapor filter 108.

The seawater 100 in the drain pipe 103 has a pressure density due to the seawater 100 present between the solution position height H1 and the solution position height H2 and the gravity. The seawater 100 lifted into the CO₂ release tank 101 is drained as follows. That is, the seawater flows in the drain pipe 103 in the direction of an arrow illustrated in the figure due to the relationship among the aforementioned pressure density, the vapor pressure of the seawater 100 generated in the vacuum space 104, and atmospheric pressure generated at the seawater surface at the solution position height H2. As a result, the seawater is drained from the drain outlet 113.

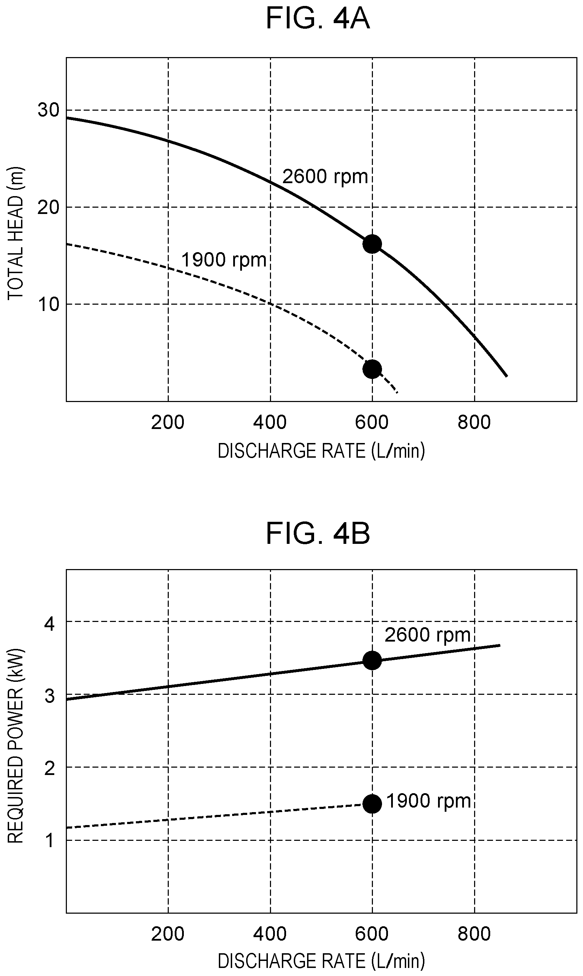

Because the seawater 100 lifted from the water lifting pipe 102 and the seawater 100 drained from the drain pipe 103 have the same pressure density, the water lifting pump 106 can lift water with small electric power in the same way as the siphon principle. Figs. 4A and 4B illustrate the relationship between the total head and the power consumption of the water lifting pump.

When the water lifting pump 106 lifts water at 600 L/min, for example, it is necessary to operate the water lifting pump 106 at 2600 rpm to lift water by 15 m, and the power consumption at this time is about 3.5 kW. It is sufficient that the water lifting pump 106 be operated at 1900 rpm to lift water by 2 m, and the power consumption at this time is about 1.5 kW. By utilizing the siphon principle, the seawater 100 circulates in the apparatus with power consumption with which the water lifting pump 106 lifts water only slightly. In order that the water lifting pump 106 can lift water with small electric power by utilizing the siphon principle, it is desirable that the seawater 100 do not boil due to depressurization. However, because it is possible to recover carbon dioxide by depressurization while maintaining circulation of the seawater 100 in the apparatus even if the seawater 100 boils, the configuration of the apparatus is not limited to the one such that the seawater 100 does not boil.

In an example, the solution position height H1 is a height such that the seawater 100 can circulate in the apparatus even when the temperature of the seawater 100 is 40°C. The apparatus configuration is such that the seawater 100 can circulate in the apparatus and the vacuum space 104 is present in the CO₂ release tank 101 even when the height of the seawater surface changes due to the tidal range of seawater.

As described above, oxygen, nitrogen, and carbon dioxide in the atmosphere are dissolved in seawater and freshwater in the natural world, and, in particular, carbon dioxide is dissolved by a larger amount than the other atmospheric molecules. The seawater 100 present in the CO₂ release tank 101, the water lifting pipe 102, and the drain pipe 103 releases carbon dioxide and the other gas molecules dissolved in the seawater 100 to the vacuum space 104 by depressurization. Carbon dioxide and the other atmospheric molecules released to the vacuum space 104 are temporarily recovered to a CO₂ buffer tank 105 by the vacuum pump 107 via the vapor filter 108 having a mesh structure for removing water vapor.

Carbon dioxide recovered to the CO₂ buffer tank 105 and the other gas molecules simultaneously recovered are pressurized to a pressure higher than atmospheric pressure by a pressure pump 109 and are stored in the CO₂ recovery tank 110. Water that could not have been removed by the vapor filter 108 accumulates in the CO₂ buffer tank 105. Because a large amount of carbon dioxide is dissolved in the water accumulated in the CO₂ buffer tank 105, carbon dioxide is released from the accumulated water by heating the accumulated water by using a buffer-tank heating mechanism 114. The buffer-tank heating mechanism 114 is a heater that performs heating by using electric power. It is desirable that the buffer-tank heating mechanism 114 use green electric power. However, commercial electric power may be used, as long as there is no problem of carbon dioxide recovery balance.

The CO₂ buffer tank 105 has a mechanism that drains water accumulated therein (not shown).

In the present embodiment, the buffer-tank heating mechanism 114 releases carbon dioxide from water that accumulates in the CO₂ buffer tank 105. On the other hand, carbon dioxide may be released from the water by depressurization. For example, the pressure pump 109 may depressurize the inside of the CO₂ buffer tank 105.

The present embodiment is configured to store carbon dioxide in the CO₂ recovery tank 110 together with the other gas molecules recovered simultaneously with carbon dioxide. On the other hand, a refiner that increases carbon dioxide concentration by removing foreign gas molecules may be provided, and carbon dioxide may be stored in the CO₂ recovery tank 110 after having refined.

The positional height relationship between the drain outlet of the water lifting pipe 102 and the water inlet of the drain pipe 103 in the CO₂ release tank 101 is such that the height of the water supply port of the drain pipe 103 is greater than the height of the drain outlet of the water lifting pipe 102. However, this is an example, and is not limiting.

In the present embodiment, the drain outlet 113 is in contact with the seawater surface. However, the drain outlet 113 and the seawater surface may have a positional relationship such that these are separated with a space therebetween. If the drain outlet 113 and the seawater surface has a positional relationship such that these are separated with a space therebetween, the height of the solution position height H2 is an end surface of the drain outlet 113. The apparatus configuration is such that the seawater 100 can circulate in the apparatus and the vacuum space 104 is present in the CO₂ release tank 101 even when the height of the seawater surface changes due to the tidal range of seawater.

In the present embodiment, carbon dioxide is recovered from seawater. However, carbon dioxide may be recovered from freshwater, or, for example, rainwater, river water, or lake water.

### Second Embodiment

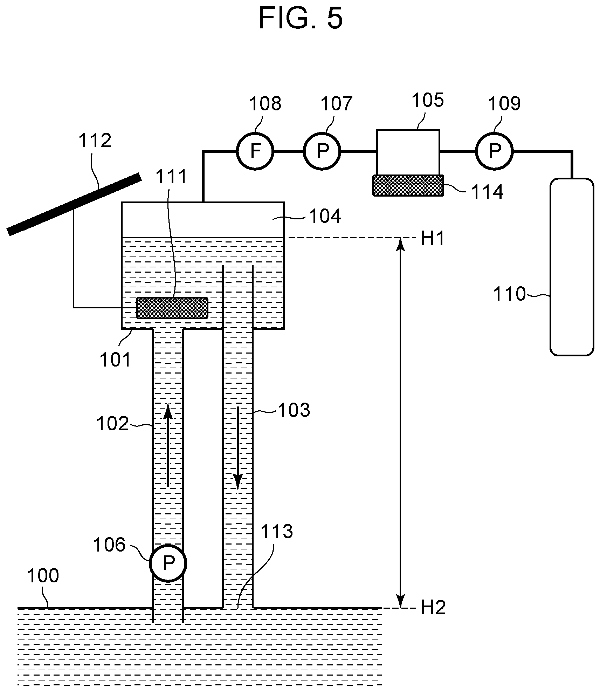

Fig. 5 illustrates a second embodiment of the present invention.

Differences from the first embodiment of the present invention will be described.

A heating mechanism 111 that heats the seawater 100 is provided in the CO₂ release tank 101. Because it is desirable that the heating mechanism 111 utilize green energy with small environmental load, the heating mechanism 111 performs heating by using a solar panel 112. The solar panel 112 may have a configuration as a solar water heater 112 so that the seawater 100 is heated as warm water heated by solar heat circulates between the solar water heater 112 and the heating mechanism 111. The heating mechanism may use commercial electric power, as long as carbon dioxide recovery balance can be achieved.

The positional height relationship between the drain outlet of the water lifting pipe 102 and the water inlet of the drain pipe 103 in the CO₂ release tank 101 is such that the height of the water supply port of the drain pipe 103 is greater than the height of the drain outlet of the water lifting pipe 102. The seawater 100 that has been heated is drained by convection from the water inlet of the drain pipe 103 disposed in an upper part of the CO₂ release tank 101.

### Third Embodiment

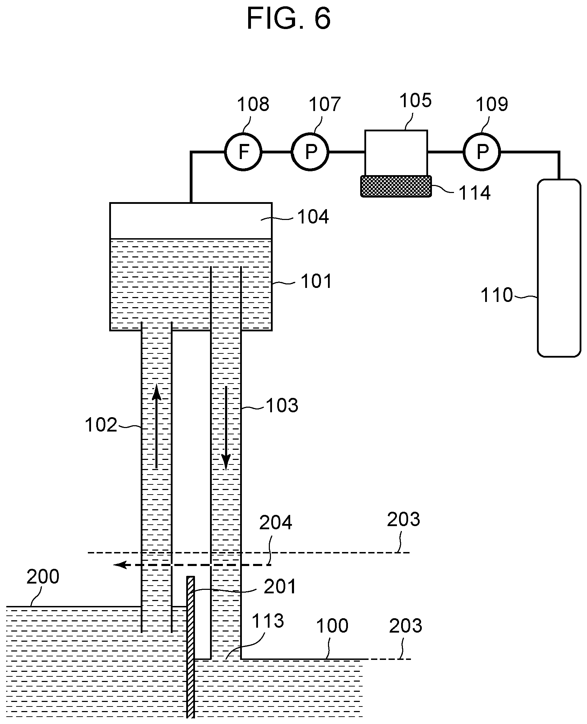

Fig. 6 illustrates a third embodiment of the present invention.

In the present embodiment, the liquid is seawater, and a first opening, which an opening of the water lifting pipe 102 toward the outside, is immersed in a first seawater portion, which is represented as seawater 200. In addition, a second opening, which an opening of the drain pipe 103 toward the outside, is immersed in a second seawater portion that is separated from the first seawater portion by a partition portion, that has a seawater surface whose height changes compared with the seawater surface of the first seawater portion due to the tides of the sea, and that is represented as the seawater 100.

Differences from the first embodiment of the present invention will be described. The configuration is such that a difference in height between a water supply surface and a drain surface is generated by utilizing the tidal range of seawater. It is known that the tidal range of the sea in Japan is, for example, about 2 m on the Pacific Ocean side. The seawater 100 is connected to the open sea, and the seawater 200 is a seawater pool that is separated from the seawater 100 by a partition portion 201. The partition portion 201 has a height such that the partition portion 201 is below sea level when the seawater 100 is at high tide and functions as a partition wall at low tide.

By making a high tide level 202 higher than the partition portion 201, it is possible to make the seawater 100 to flow over the partition portion 201 in the direction of an arrow 204 toward the seawater 200 so that the seawater 200 and the seawater 100 have the same water level.

Because a low tide level 203 is lower than the partition portion 201, the water level of the seawater 200 is higher than the water level of the seawater 100, and the seawater 200 is lifted to the CO₂ release tank 101 by the siphon principle and then drained from the drain outlet 113. The degree of vacuum of the vacuum space 104 is a degree of vacuum such that the seawater 200 can have a sufficient sea level with which the seawater 200 can circulate in the apparatus, the vacuum pump 107 discharges air, and carbon dioxide is recovered.

In the present embodiment, the water lifting pump 106 in the first embodiment is not provided. However, this is not a limitation, and a water lifting pump may be provided as an auxiliary circulation mechanism.

### Fourth Embodiment

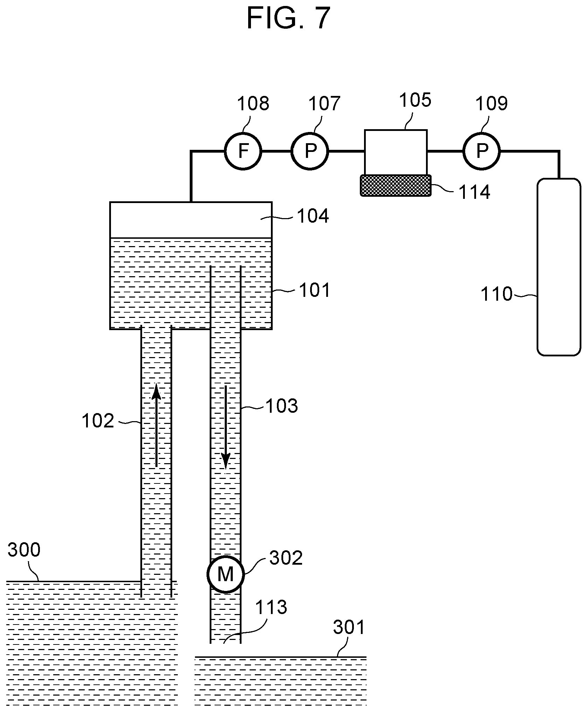

Fig. 7 illustrates a fourth embodiment of the present invention.

A carbon dioxide recovery apparatus according to the present embodiment includes a generator that generates electric power by using the flow of the liquid that flows into and out of the storage portion.

Differences from the first embodiment of the present invention will be described. The freshwater 300 is collected rainwater, river water, or lake water, and carbon dioxide in the atmosphere is dissolved in the freshwater 300.

Because the water level of the freshwater 300 is higher than the water level of the freshwater 301, the freshwater 300 is lifted to the CO₂ release tank 101 by the siphon principle and then drained from the drain outlet 113. The degree of vacuum of the vacuum space 104 is a degree of vacuum such that the water 300 can have a sufficient water level with which the water 300 can circulate in the apparatus, and the vacuum pump 107 discharges air.

A generator 302 is set in the flow path of the drain pipe 103, and generates electric power by utilizing the difference in height between the freshwater 300 and the freshwater 301. The vacuum pump 107 and the pressure pump 109 are driven by using electric power generated by the generator 302. In the present embodiment, the vacuum pump 107 and the pressure pump 109 are driven by using electric power generated by the generator 302. However, without setting the generator 302, the vacuum pump 107 and the pressure pump 109 may be driven by using commercial electric power.

### Fifth Embodiment

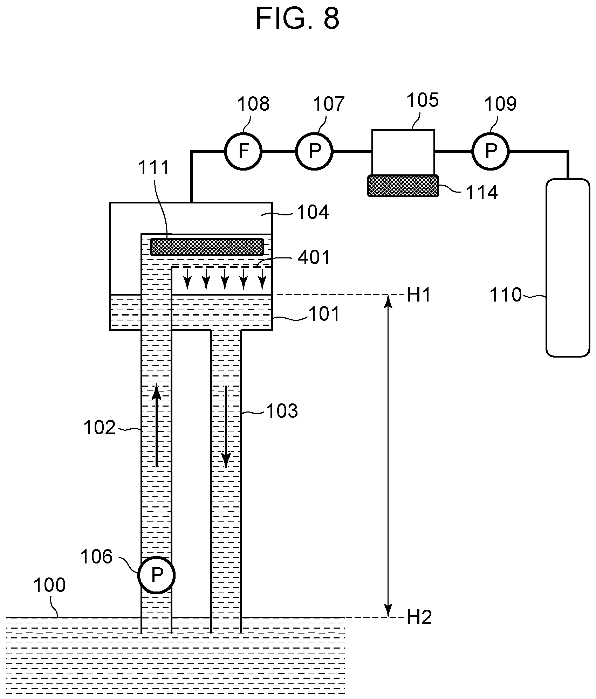

Fig. 8 illustrates a fifth embodiment of the present invention.

In a carbon dioxide recovery apparatus according to the present embodiment, a heating mechanism that heats the liquid is disposed in the inner space of the storage portion. As an additional configuration, the apparatus includes a sprinkling mechanism that sprinkles in a Torricellian vacuum space a liquid in which carbon dioxide is dissolved by spraying or dripping the liquid.

Differences from the first embodiment of the present invention will be described. The apparatus is configured so that a mist mechanism 401 that atomizes the seawater 100 is disposed in the CO₂ release tank 101. The shower mechanism 401 has a plurality of small-diameter holes that allow the seawater 100 to pass therethrough, and, by using the own weight of the seawater 100, showers the seawater 100 that has been lifted. Because the surface area of the seawater 100 increases when showered, the efficiency in releasing carbon dioxide is improved.

In the present embodiment, the heating mechanism 111 is provided at the position illustrated in the figure, and the carbon dioxide release efficiency is further increased by heating the seawater 100 before showering the seawater 100. However, the heating mechanism 111 may be omitted. The apparatus may have, instead of the shower mechanism 401, a nozzle that sprays water into the CO₂ release tank 101 from the water lifting pipe.

The solution position height H1 is the height of the water surface of the seawater 100 on the drain path side in the CO₂ release tank 101. The solution position height H1 is a height such that the seawater 100 is passively drained due to the relationship among the degree of vacuum in the CO₂ release tank 101, the pressure density of the seawater 100 on the drain path side, and atmospheric pressure.

In the present embodiment, the seawater 100 is used. However, freshwater may be used, and the apparatus may have a configuration that is a combination with configurations described in the third embodiment and the fourth embodiment.

### Sixth Embodiment

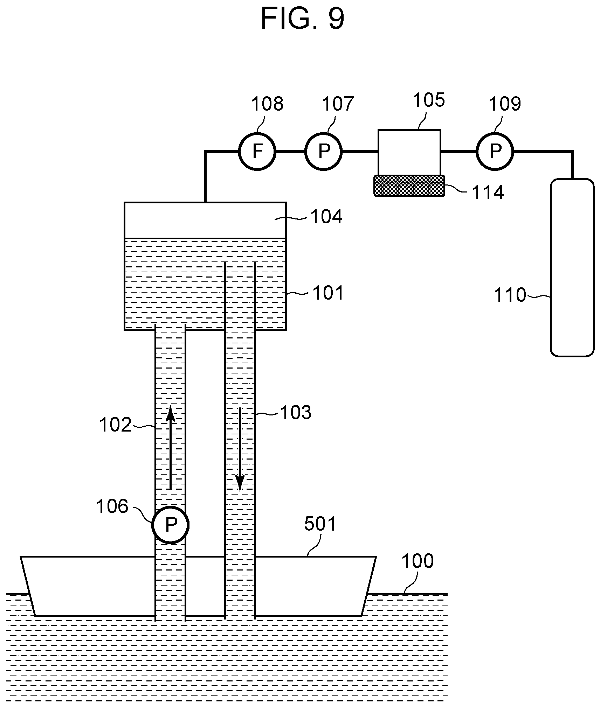

Fig. 9 illustrates a sixth embodiment of the present invention.

Differences from the first embodiment of the present invention will be described. The sixth embodiment has a configuration such that a floating mechanism that floats on a water surface is provided in the configuration of the first embodiment. By providing a floating mechanism that floats on a water surface, even when the seawater height changes due to a tidal force, change in the height relationship between a carbon dioxide recovery apparatus and the solution position height H1 is reduced. In the present embodiment, the apparatus is configured to be set on a ship. The apparatus may have a configuration that is a combination with configurations described in the second embodiment or the fifth embodiment.

### Seventh Embodiment

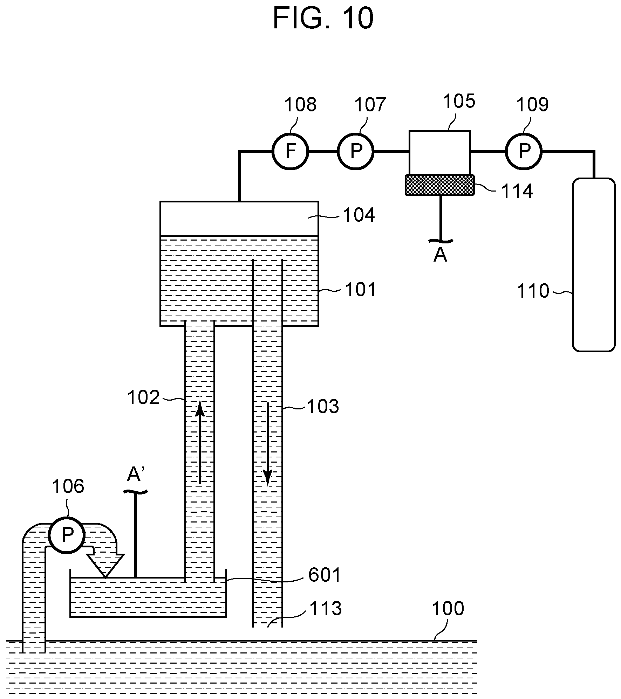

Fig. 10 illustrates a seventh embodiment of the present invention.

In the carbon dioxide recovery apparatus according to the present embodiment, via a water storage tank that receives pressure due to the atmosphere, that lifts and stores seawater, and that is different from the storage portion, the liquid is allowed to flow between the water storage tank and the storage portion.

Differences from the first embodiment of the present invention will be described. By setting a temporary water lifting pool 601, which is the water storage tank different from the storage portion, and configuring the drain outlet 113 so as not to contact the seawater surface, the carbon dioxide recovery apparatus has a configuration such that the relationship between the apparatus and the solution position height H1 does not change due to a change in water level caused by a tidal force of seawater.

The seawater 100 is lifted to the temporary water lifting pool 601 by using the water lifting pump 106, and the seawater 100 is lifted from the temporary water lifting pool 601 to the CO₂ release tank 101 via the water lifting pipe 102. The water supply port of the water lifting pump is at a height such that the water lifting pump can draw water even at low tide, and the drain outlet 113 is at a height such that the drain outlet 113 does not contact the seawater surface even at high tide. Although it is desirable that the drain outlet 113 be at a height such that the drain outlet 113 does not contact the seawater surface even at high tide, if a change in the height relationship between the carbon dioxide recovery apparatus and the solution position height H1 is slight, the drain outlet 113 may contact the seawater surface.

The temporary water lifting pool 601 has a structure such that the seawater 100 stored therein receives a pressure based on atmospheric pressure. In the present embodiment, the temporary water lifting pool 601 has a structure such that an upper part thereof is open to the atmosphere so that the seawater 100 in the temporary water lifting pool 601 directly receives atmospheric pressure. However, for example, a cover that floats on the seawater 100 in the temporary water lifting pool 601 may be provided to cover the seawater 100.

Water accumulated in the CO₂ buffer tank 105 is returned to the temporary water lifting pool 601 via A and A' illustrated in Fig. 9. However, the water may be released to the sea. The apparatus may have a configuration that is a combination with configurations described in the second embodiment, the fifth embodiment, and the sixth embodiment. Eighth Embodiment

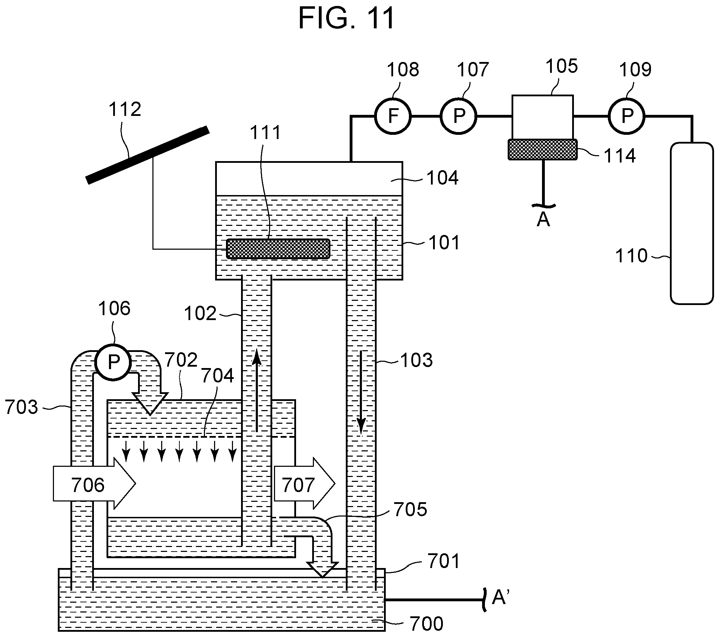

Fig. 11 illustrates an eighth embodiment of the present invention.

A carbon dioxide recovery apparatus according to the present embodiment has a carbon dioxide dissolving mechanism that dissolves carbon dioxide in the atmosphere into the liquid.

Differences from the first embodiment of the present invention will be described. The present embodiment includes a CO₂ dissolver tank 702 for dissolving carbon dioxide in the atmosphere in a solvent. A solvent recovery tank 701 stores a solvent, and the water lifting pump 106 included in a primary water lifting pipe 703 lifts the solvent to the CO₂ dissolver tank 702. The CO₂ dissolver tank 702 has a shower mechanism 401 therein, the shower mechanism 401 has a structure having a plurality of small-diameter holes that allow the solvent to pass therethrough, and showers the solvent into the CO₂ dissolver tank 702 by using the own weight of the solvent.

A blower 706 blows the atmosphere including carbon dioxide into the CO₂ dissolver tank 702, and the atmosphere including carbon dioxide is efficiently dissolved in the solvent because the solvent is increased in surface area when showered. An air discharge port 707 includes a mesh filter that prevents leakage of the solvent out of the CO₂ dissolver tank 702, and discharges to the outside the atmosphere in the CO₂ dissolver tank 702 that has become unnecessary.

Showered solvent accumulates in a lower part of the CO₂ dissolver tank 702, and solvent at or above a certain level is drained to the solvent recovery tank 701 through a primary drain pipe 705. A primary circulation system for solvent is formed by the solvent recovery tank 701, the primary water lifting pipe 703, the CO₂ dissolver tank 702, and the primary drain pipe 705.

A part of solvent accumulated in a lower part of the CO₂ dissolver tank 702 is lifted to the CO₂ release tank 101 by using a configuration described in the first embodiment via the water lifting pipe 102, and carbon dioxide is recovered from the solvent by depressurization. A secondary circulation system is formed by the water lifting pipe 102, the CO₂ release tank 101, the drain pipe 103, and the solvent recovery tank 701. The amount of solvent that circulates in the primary circulation system is larger than the amount of solvent that circulates in the secondary circulation system. In the present embodiment, the primary circulation system is configured so that the amount of solvent that circulates in the primary circulation system is 10 times the amount of solvent that circulates in the secondary circulation system.

A liquid generated by depressurizing solvent gradually accumulates in the CO₂ buffer tank 105. Because a large amount of carbon dioxide is dissolved in the liquid, carbon dioxide is released from the accumulated liquid as the buffer-tank heating mechanism 114 heats the liquid. The liquid that has been degassed by being heated is discharged to the solvent recovery tank 701 via the paths A and A' illustrated in Fig. 10.

In the present embodiment, seawater is used as a solvent for dissolving carbon dioxide in the atmosphere. However, this is not a limitation, and the solvent may be freshwater, an alkaline solution, or a fluorine-based active solution. The apparatus configuration in the present embodiment may be a part of a salt-manufacturing process such as a flow-down saltpan. Because the apparatus configuration of the present embodiment has a high degree of freedom, it is possible to set the apparatus near a plastic greenhouse as a plant growing space and to use the apparatus as a carbon dioxide supply apparatus for plant growing. That is, it is possible to configure a plant growing mechanism including a plant growing portion having a plant growing space therein and the carbon dioxide recovery apparatus described above. The plant growing mechanism is configured so that the accumulation portion described above and the plant growing space communicate with each other and carbon dioxide is supplied from the accumulation portion to the plant growing space. The plant growing mechanism can recover carbon dioxide by using the carbon dioxide recovery method described above and to grow a plant by supplying recovered carbon dioxide to the plant growing space in which a plant is grown.

As electric power for operating the apparatus, in view of carbon dioxide recovery balance, it is desirable to use green electric power generated by solar power generation, water-power generation, or geothermal power generation. Ninth Embodiment

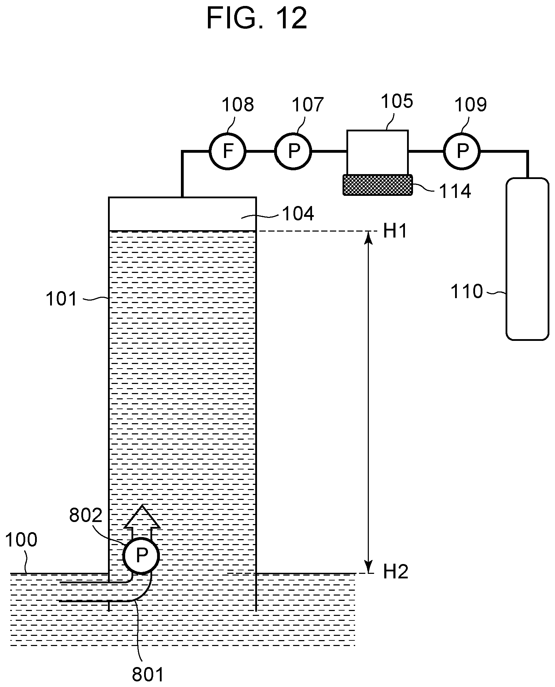

Fig. 12 illustrates a ninth embodiment of the present invention.

Differences from the first embodiment of the present invention will be described. The lower surface of the CO₂ release tank 101 is open, and the CO₂ release tank 101 is set on the surface of the seawater 100. As the vacuum pump 105 depressurizes the inside of the CO₂ release tank 101, the seawater 100 is lifted into the CO₂ release tank 101, and the vacuum space 104 is formed.

In the present embodiment, a water supply pipe 801 and a water supply pump 802 introduce the seawater 100 present outside of the CO₂ release tank 101 into the CO₂ release tank 101. By ejecting the seawater 100 toward an upper part of the CO₂ release tank 101, the seawater 100 is drained from the CO₂ release tank while causing convection in the seawater 100 in the CO₂ release tank 101. On the other hand, the water supply pipe 801 and the water supply pump 802 may be omitted, and the seawater 100 may be supplied into and drained from the CO₂ release tank by natural convection.

The seawater 100 is ejected by the water supply pump 802. However, a heating mechanism that heats the seawater 100 may be provided, the seawater 100 that has been heated may be introduced into the CO₂ release tank 101, and the seawater 100 may be drained from the CO₂ release tank 101 by thermal convection.

The present invention is not limited to the embodiments described above, and can be changed and modified in various ways without departing from the spirit and scope of the present invention. Accordingly, the following claims are attached to disclose the scope of the present invention.

This application claims the priority of Japanese Patent Application No. 2022-187567 filed November 24, 2022, which is hereby incorporated by reference herein in its entirety.

### Reference Signs List

- 100: seawater
- 101: CO₂ release tank
- 102: water lifting pipe
- 103: drain pipe
- 104: vacuum space
- 105: CO₂ buffer tank
- 106: water lifting pump
- 107: vacuum pump
- 108: vapor filter
- 109: pressure pump
- 110: CO₂ cylinder
- 111: heating mechanism
- 112: solar panel
- 113: drain outlet
- 114: buffer-tank heating mechanism
- H1: solution position height
- H2: solution position height

## Claims

1. A carbon dioxide recovery apparatus comprising:
a storage portion that includes a partition wall separating an atmosphere and an inner space and that stores in the inner space a liquid in which carbon dioxide is dissolved;
a suction portion that lifts the liquid by suctioning a gas present in the inner space; and
an accumulation portion that accumulates carbon dioxide recovered from a Torricellian vacuum space that is formed as the liquid is lifted.

2. The carbon dioxide recovery apparatus according to Claim 1, wherein the suction portion recovers the carbon dioxide from the Torricellian vacuum space.

3. The carbon dioxide recovery apparatus according to Claim 1, wherein the storage portion has a first opening and a second opening, and one of the openings is provided above the other of the openings in a vertical direction with respect to a liquid surface.

4. The carbon dioxide recovery apparatus according to Claim 1 or 2, comprising an auxiliary circulation mechanism that assists in circulation of the liquid.

5. The carbon dioxide recovery apparatus according to Claim 1 or 2, wherein the liquid is at least one of rainwater, river water, lake water, tap water, and seawater.

6. The carbon dioxide recovery apparatus according to Claim 3,
wherein the liquid is seawater,
wherein the first opening is immersed in a first seawater portion, and
wherein the second opening is immersed in a second seawater portion that is separated from the first seawater portion by a partition portion and that has a seawater surface whose height changes compared with a seawater surface of the first seawater portion due to tides of the sea.

7. The carbon dioxide recovery apparatus according to Claim 1 or 2, comprising a generator that generates electric power by using flow of the liquid that flows into and out of the storage portion.

8. The carbon dioxide recovery apparatus according to Claim 1 or 2, wherein a heating mechanism that heats the liquid is disposed in the inner space of the storage portion.

9. The carbon dioxide recovery apparatus according to Claim 1 or 2, comprising a sprinkling mechanism that sprinkles in the Torricellian vacuum space a liquid in which carbon dioxide is dissolved by spraying or dripping the liquid.

10. The carbon dioxide recovery apparatus according to Claim 1 or 2, comprising a floating mechanism that floats on freshwater or seawater.

11. The carbon dioxide recovery apparatus according to Claim 1 or 2, wherein, via a water storage tank that receives pressure due to the atmosphere, that lifts and stores seawater, and that is different from the storage portion, the liquid is allowed to flow between the water storage tank and the storage portion.

12. The carbon dioxide recovery apparatus according to Claim 1 or 2, comprising a carbon dioxide dissolving mechanism that dissolves carbon dioxide in the atmosphere in the liquid.

13. The carbon dioxide recovery apparatus according to Claim 1 or 2, wherein the accumulation portion accumulates carbon dioxide at a pressure higher than or equal to atmospheric pressure.

14. The carbon dioxide recovery apparatus according to Claim 1 or 2, wherein the accumulation portion includes a tank that accumulates carbon dioxide and includes a heating mechanism that heats water accumulated in the tank.

15. The carbon dioxide recovery apparatus according to Claim 1 or 2, wherein the accumulation portion includes a tank that accumulates carbon dioxide, and releases carbon dioxide from water accumulated in the tank by depressurizing an inside of the tank.

16. A plant growing mechanism comprising:
a plant growing portion having a plant growing space therein; and
the carbon dioxide recovery apparatus according to Claim 1 or 2,
wherein the accumulation portion and the plant growing space communicate with each other, and carbon dioxide is supplied to the plant growing space from the accumulation portion.

17. A carbon dioxide recovery method comprising:
a suctioning step performed by a suction portion to lift a liquid in which carbon dioxide is dissolved by suctioning a gas present in an inner space of a storage portion that includes a partition wall separating an atmosphere and the inner space and that stores the liquid in the inner space; and
an accumulation step performed by the storage portion to accumulate carbon dioxide recovered from a Torricellian vacuum space that is formed as the liquid is lifted.

18. A plant growing method comprising:
a step of recovering carbon dioxide by executing the carbon dioxide recovery method according to Claim 17; and
a plant growing step of growing a plant by supplying the recovered carbon dioxide to a plant growing portion having therein a plant growing space in which the plant is grown.
